(19) Europäisches Patentamt
European Patent Office
Office européen des brevets

(11) **EP 1 817 207 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **04803115.7**

(22) Anmeldetag: **10.11.2004**

(51) Int Cl.:
***B60R 21/01*** *(2006.01)*

(86) Internationale Anmeldenummer:
**PCT/EP2004/012684**

(87) Internationale Veröffentlichungsnummer:
**WO 2006/050740 (18.05.2006 Gazette 2006/20)**

(54) **KRAFTFAHRZEUG MIT EINER INSASSENRÜCKHALTEEINRICHTUNG**

MOTOR VEHICLE COMPRISING AN OCCUPANT RESTRAINT DEVICE

VEHICULE AUTOMOBILE EQUIPE D'UN SYSTEME DE RETENUE DES OCCUPANTS

(84) Benannte Vertragsstaaten:
**DE FR**

(43) Veröffentlichungstag der Anmeldung:
**15.08.2007 Patentblatt 2007/33**

(73) Patentinhaber: **Daimler AG**
**70327 Stuttgart (DE)**

(72) Erfinder:
• **BAUMANN, Karl-Heinz**
**71149 Bondorf (DE)**

• **FEHRING, Michael**
**73765 Neuhausen (DE)**
• **JUSTEN, Rainer**
**71155 Altdorf (DE)**
• **SCHÖNEBURG, Rodolfo**
**72379 Hechingen (DE)**

(74) Vertreter: **JENSEN & SON**
**366-368 Old Street**
**London EC1V 9LT (GB)**

(56) Entgegenhaltungen:
**DE-A1- 10 126 127    US-B1- 6 804 595**

**Beschreibung**

Die Erfindung betrifft ein Kraftfahrzeug mit einer Insassenrückhalteeinrichtung nach der im Oberbegriff des Patentanspruches 1 näher definierten Art, wie aus dem Dokument DE 10126127A bekannt.

Zu Insassenrückhalteeinrichtungen, welche bei Kraftfahrzeugen serienmäßig verbaut werden, zählen neben so genannten Sicherheitsgurten, welche den Fahrzeuginsassen auf dem Fahrzeugsitz halten, auch so genannte Airbag-Systeme mit einem aufblasbaren Gassack, welcher bei Nichtgebrauch in zusammengelegtem Zustand in einem Unterbringungsraum beispielsweise unter der Windschutzscheibe oder im Fußraum im Bereich einer Armaturen-/Handschuhfachverkleidung angeordnet ist und daraus beim Aufblasen austritt. Der Gassack wird dabei mittels eines sensorgesteuerten Gasgenerators kurzzeitig aufgeblasen, so dass zum Schutz des Insassen ein ballonartiges Prallkissen gebildet wird, das sodann erschlafft.

Um der Vorverlagerung eines Fahrzeuginsassen möglichst frühzeitig zu begegnen, werden Rückhaltemittel für Fahrzeuginsassen in der Regel bei Erkennen einer kritischen fahrdynamischen Situation in einer so genannten Pre-Crash-Phase ausgelöst, wobei zunächst in der Regel der Sicherheitsgurt durch einen elektronischen Gurtstraffer gestrafft wird, um unerwünschte Insassenbewegungen zu vermeiden, da crashaktive Rückhaltesysteme wie Airbags oder andere Positionierungsmittel, wie beispielsweise ausfahrbare Polster, eine optimale Schutzwirkung nur in definierten Insassenpositionen entfalten können.

Die Ansteuerung von derartigen Insassenrückhalteeinrichtungen erfolgt in der Praxis durch Auswertung von Sensoren einer Sicherheitssensorik, welche unterschiedliche Fahrtzustandsdaten und die Zustände fahrdynamischer Regelsysteme detektiert. Wenn hierbei ein fahrdynamisch kritischer Zustand erkannt wird, werden die Rückhalteeinrichtungen für Fahrzeuginsassen angesteuert, um eine unerwünschte Insassenbewegung im Fahrzeuginnenraum zu verhindern.

Ein Beispiel für ein Verfahren zur Wirksamschaltung eines solchen die Insassen in einem Kraftfahrzeug schützenden Sicherheitssystem ist in der DE 38 03 426 A1 beschrieben, wobei hier ein von mindestens einem Beschleunigungssensor abgegebenes Signal ausgewertet wird, aus dem Signal des Beschleunigungssensors ein Gefährdungssignal abgeleitet wird, das die zu erwartende Vorverlagerung des Insassen beschreibt, und wobei bei Überschreiten eines vorgebbaren Schwellwertes durch das Gefährdungssignal das Sicherheitssystem aktiviert wird.

Problematisch ist hier jedoch grundsätzlich, wenn ein Fahrzeuginsasse nicht durch einen Sicherheitsgurt gesichert ist, wobei insbesondere ungesicherte Mitfahrer bei einer unverhofft eintretenden Notbremssituation ungebremst nach vorne bewegt werden. Kommt es in der Folge einer solchen ungewollten Insassenvorverlagerung zu einem Fahrzeugaufprall mit einer Airbagauslösung oder dem Ausfahren eines Prallpolsters in Richtung des Fahrzeuginsassen, kann sich die so genannte "Out-of-Position"-Situation des Fahrzeuginsassen dahingehend negativ auswirken, dass der Fahrzeuginsasse durch die Nähe zu der Airbagaustrittöffnung oder der Ruheposition eines ausfahrbaren Prallpolsters einer erheblichen Einwirkung seitens dieser Insassenrückhalteeinrichtungen ausgesetzt ist. Dabei ist auch zu berücksichtigen, dass der Fahrzeuginsasse, welcher sich in einer solchen vorverlagerten "Out-of-Position"-Situation befindet, nicht statisch vor der Austrittsöffnung der entsprechenden Insassenrückhalteeinrichtung verharrt, sondern den bei dem Fahrzeugaufprall herrschenden Massenkräften unterliegt.

Es ist daher Aufgabe der vorliegenden Erfindung, ein Kraftfahrzeug mit einer Insassenrückhalteeinrichtung zu schaffen, wobei die Situation eines vorverlagerten Fahrzeuginsassen bei der Auslösung der Insassenrückhalteeinrichtung besser berücksichtigt ist.

Diese Aufgabe wird erfindungsgemäß durch die kennzeichnenden Merkmale des Patentanspruches 1 gelöst.

Bei nicht gesicherten Fahrzeuginsassen und dem Vorliegen einer Bremsung mit definierter Verzögerung, die zu einer unerwünschten Insassenvorverlagerung führen kann, wird die mit einem Prallkissen auf den Fahrzeuginsassen einwirkende Insassenrückhalteeinrichtung zur Vermeidung einer zu starken Einwirkung auf den Fahrzeuginsassen somit zeitlich befristet deaktiviert oder mit reduzierter Kraft aktiviert, wobei auch eine verzögerte Aktivierung mit reduzierter Kraft bzw. gemäß einem vorgegebenen, situationsangepasstem Kraftverlauf vorgesehen sein kann. Die Auslösung der Insassenrückhalteeinrichtung ist damit an die Position eines nicht gesicherten Fahrzeuginsassen angepasst, so dass dieser durch die Insassenrückhalteeinrichtung nicht unnötig stark beeinträchtigt wird.

Um das Risiko, dem der nicht gesicherte Fahrzeuginsasse bei der Auslösung der Insassenrückhalteeinrichtung ausgesetzt ist, möglichst genau zu berücksichtigen, ist es vorteilhaft, wenn die Steuereinrichtung der Insassenrückhalteeinrichtung zur Generierung des Gefährdungssignals die Fahrzeugbeschleunigungssignale bezüglich des Betrages und ihres zeitlichen Verlaufs, insbesondere in einer einem Fahrzeugaufprall vorangehenden Pre-Crash-Phase auswertet.

Die Bewertung des Fahrzeugverzögerungsverlaufes in der dem Aufprall vorangehenden Zeitperiode ist ein zentrales Element für die Entscheidung der zeitlichen Deaktivierung der Insassenrückhalteeinrichtung oder deren Ansteuerung mit reduzierter Kraft bzw. mit einer reduzierten Anzahl von auf Fahrzeuginsassen einwirkenden Elementen.

So kann bei einer Ausgestaltung der Insassenrückhalteeinrichtung als eine Airbag-Modul mit einem entfaltbaren Luftsack als Prallkissen vorgesehen sein, das der Luftsack in wenigstens zwei Stufen ggf. mit unterschiedlicher Kraft bzw. Dynamik entfaltbar ist, wobei die Steuereinrichtung bei einer erkannten Deaktivierung des Sicherheitsgurtes und einer kritischen Insassenvorverlagerung zugeordneten Fahrzeugbeschleunigungssignalen ein Signal zur Auslösung nur einer Stufe mit einer reduzierten Kraft oder einer schwächeren Auslösedynamik ausgibt. Bei einem bekannten zweistufigen Airbag-Gasgenerator kann dies bedeuten, dass die Steuereinrichtung bei einer erkannten Deaktivierung des Sicherheitsgurtes und einer kritischen Insassenvorverlagerung zugeordneten Fahrzeugbeschleunigungssignalen ein Signal zur Auslösung nur der ersten Stufe ausgibt und die zweite Stufe oder gegebenenfalls auch eine weitere Stufe des Airbag deaktiviert wird.

Bei einer vorteilhaften Ausführung der Erfindung kann es vorgesehen sein, dass die Steuereinrichtung einen über einen Längsbeschleunigungssensor ermittelten Verzögerungsbetrag und/oder einen über einen Querbeschleunigungssensor ermittelten Verzögerungsbetrag als Fahrzeugbeschleunigungssignal auswertet. Dabei kann auch ein aus diesen Verzögerungsbeträgen resultierender Verzögerungsbetrag ermittelt werden und als Fahrzeugbeschleunigungssignal ausgewertet werden.

Ergänzend oder alternativ hierzu ist es auch möglich, dass die Steuereinrichtung einen über die Fahrzeuggeschwindigkeit ermittelten Verzögerungsbetrag in Fahrzeuglängsrichtung als Fahrzeugbeschleunigungssignal auswertet, wobei hier als die Fahrzeuggeschwindigkeit repräsentierende Signale die Ausgangssignale von Raddrehzahlsensoren herangezogen werden können.

Die Heranziehung der Signale eines Längsbeschleunigungssensors und gegebenenfalls eines Querbeschleunigungssensors und/oder von Raddrehzahlsensoren ermöglicht die Berücksichtigung der realen Fahrzeugverzögerung, so dass beispielsweise bei einer Notbremsung bei einem niedrigen Fahrbahnreibwert und mithin einer nur geringen Fahrzeugverzögerung keine Deaktivierung oder reduzierte Auslösung der Insassenrückhalteeinrichtung erfolgt.

Als weitere Eingangsgröße wird vorzugsweise die Wirkdauer der Fahrzeugverzögerung bzw. des jeweiligen Verzögerungsbetrages gemessen, wobei auch die Wirkdauer über.die Längsbeschleunigungs-, Querbeschleunigungs- und Raddrehzahlsensoren festgestellt werden kann.

Neben der Ausgestaltung der Insassenrückhalteeinrichtung als Airbag-System können weiterhin als Insassenrückhalteeinrichtung mit einem Prallkissen beliebige verfahrbare Prallkörper vorgesehen sein, welche mittels einer Ansteuerung in Größe, Härte, Form und Lage verändert werden können.

Die Schwelle des Vorverlagerungsweges kann dabei in einfacher Weise in Abhängigkeit des Abstandes zwischen einer Armaturenbrett-/Handschuhfachverkleidung und einer maximalen Rückwärtsstellung eines Fahrzeugsitzes bzw. dessen Rückenlehne festgelegt werden, womit sich der maximale Vorverlagerungsweg aus dem Maßkonzept des Fahrzeugs bei hinterster Fahrzeugsitzstellung, gemessen am Oberkörper des Insassen an der Rückenlehne bis zum Erstkontakt an der Armaturen-/Handschuhfachverkleidung ergibt. Dieser Wert ist aus den Konstruktionsdaten des Fahrzeugs zu ermitteln und kann im Auslösealgorithmus der Insassenrückhalteeinrichtung hinterlegt sein.

Da sich der maximale Vorverlagerungsweg je nach Fahrzeugsitzlängsverstellung und Lehnenneigung verringert, kann beispielsweise auch ein Signal einer elektronischen Erfassung der Fahrzeugsitzposition, wie es bei einer motorischen Sitzverstelleinrichtung in der Regel vorliegt, herangezogen werden.

Während bei einer einfachen Ausführung der Erfindung der Insasse als frei bewegliche Masse gegenüber dem Fahrzeug dargestellt werden kann, kann es weiterhin auch vorgesehen sein, eine mögliche Abstützung des Insassen über einen entsprechenden Korrekturwert berücksichtigt wird oder dass morphologische Daten der Fahrzeuginsassen, welche zum Beispiel über eine Sitzbelegungseinrichtung oder über optische Innenraumüberwachungseinrichtungen ermittelt werden können sowie über derartige Einrichtungen zur Verfügung stehende weitere Informationen über die Insassenposition, an die Steuereinrichtung zur Ansteuerung der Insassenrückhalteeinrichtung ausgegeben werden.

Weitere Vorteile und vorteilhafte Ausgestaltungen eines Kraftfahrzeuges mit einer Insassenrückhalteeinrichtung gemäß der Erfindung ergeben sich aus der Beschreibung, der Zeichnung und den Patentansprüchen.

In der Zeichnung ist prinzipmäßig ein Ausführungsbeispiel eines erfindungsgemäß ausgestalteten Kraftfahrzeuges dargestellt, welches in der nachfolgenden Beschreibung näher erläutert wird.

Dabei zeigt die einzige Figur der Zeichnung eine stark schematisierte Draufsicht eines Kraftfahrzeuges 1, das als Personenkraftwagen oder auch als Nutzkraftwagen ausgeführt sein kann und welches mit einem präventiv wirkenden Schutzsystem ausgestattet ist.

Das präventiv wirkende Schutzsystem weist eine Sicherheitssensorik 2 auf, die unter anderem eine Fahrzustandssensorik mit einem eine Fahrzeuglängsbeschleunigung a_x ermittelndem Längsbeschleunigungssensor 4 und einem eine Fahrzeugquerbeschleunigung a_y ermittelndem Querbeschleunigungssensor 5 aufweist. Weiterhin umfasst die Fahrzustandssensorik Raddrehzahlsensoren 8, 9, 10 und 11, über deren Signale eine Fahrzeuggeschwindigkeit v_x ermittelt werden kann.

Damit ist die Fahrzustandssensorik zur Erfassung längsdynamischer und querdynamischer Fahrzustandsinformationen, unter anderem zur Erkennung einer Not- und Panikbremsung, eines Übersteuerns und/oder eines Untersteuerns des Kraftfahrzeuges 1, ausgelegt. Die Fahrzustandssensorik kann selbstverständlich mit weiteren Fahrdynamikfunktionalitäten, wie beispielsweise einem Antiblockiersystem und/oder einem elektronischen Stabilitätsprogramm, auf an sich bekannte Weise kommunizieren und weitere Informationen für wichtige fahrdynamische Größen, wie eine Gierbeschleunigung, einen Ein- und Ausfederweg, das Fahrzeugniveau, eine Gaspedalbewegung, eine Gaspedalstellung, eine Bremspedalstellung, eine Bremspedalbewegung, einen Lenkwinkel und eine Lenkwinkelgeschwindigkeit etc. erfassen.

Die Sicherheitssensorik 2 umfasst weiterhin ein in der Zeichnung bezüglich eines Beifahrersitzes 3 mit einem darauf befindlichen Insassen 6 gezeigtes Gurtschloss 7 eines Sicherheitsgurtes 15, welches einen geöffneten oder geschlossenen Gurtzustand detektiert.

Das Gurtschloss 7 gibt ebenso wie der Längsbeschleunigungssensor 4, der Querbeschleunigungssensor 5 und die Raddrehzahlsensoren 8, 9, 10 und 11 Signale an eine Steuereinrichtung 12, welche eine hier als Airbag-Modul mit einem aufblasbaren Gassack 13 als Prallkissen ausgebildete Insassenrückhalteeinrichtung 14 ansteuert.

In Abhängigkeit der Signale der Sicherheitssensorik 2 generiert die Steuereinrichtung 12 ein Gefährdungssignal, vergleicht dieses mit einem vordefinierten Schwellenwert und erzeugt bei Überschreiten dieses Schwellenwertes ein Auslösesignal für das Airbag-Modul 14 mit einer entsprechenden Entfaltung des Gassackes 13, wobei sie bei einer erkannten Deaktivierung des Sicherheitsgurtes 15 und Fahrzeugbeschleunigungssignalen, denen bei Deaktivierung des Sicherheitsgurtes 15 eine kritische Insassenvorverlagerung zugeordnet ist, das Airbag-Modul 14 wenigstens für einen bestimmten Zeitraum deaktiviert oder mit reduzierter Kraft, d. h. nur eine erste von zwei Stufen, gegebenenfalls verzögert aktiviert.

Im Einzelnen berechnet die Steuereinrichtung 12 aus dem über den Längsbeschleunigungssensor 4 ermittelten Verzögerungsbetrag a_x und dem über den Querbeschleunigungssensor 5 ermittelten Verzögerungsbetrag a_y einen resultierenden Verzögerungsbetrag a_r gemäß der Formel

$$a\_r = \sqrt{(a\_x^2 + a\_y^2)}$$

und wertet diesen resultierenden Verzögerungsbetrag a_r als Fahrzeugbeschleunigungssignal aus.

Ergänzend wird vorliegend zur Plausibilisierung die Fahrzeuglängsverzögerung aus der anhand der Raddrehzahlsensoren 8, 9, 10, 11 ermittelten Fahrzeuggeschwindigkeit v_x errechnet.

Eine weitere Eingangsgröße der Steuereinrichtung 12 ist die jeweilige Wirkdauer t der Verzögerungsbeträge, wobei die Wirkdauer t vorliegend von den die Verzögerungswerte jeweils erfassenden Sensoren miterfasst wird.

Der für das Airbag-Modul 14 in der Steuereinrichtung 12 abgelegte Auslösealgorithmus sieht bei dem vorliegenden Ausführungsbeispiel weiterhin vor, dass eine Insassenvorverlagerung als kritisch definiert ist, wenn ein sich aus den Fahrzeugbeschleunigungssignalen a_x, a_y, a_r und ihrer Wirkzeit t errechneter Vorverlagerungsweg S_l größer als eine Schwelle eines Vorverlagerungsweges S_max ist.

Der Vorverlagerungsweg S_l kann dabei gemäß der Funktion

$$S\_l = (a\_r * t^2)/2$$

errechnet werden.

Der hier als Schwellenwert dienende maximale Vorverlagerungsweg S_max ergibt sich aus den geometrischen Verhältnissen im Inneren des Kraftfahrzeuges 1, wobei vorliegend in einfacher Weise der Abstand zwischen einer Rückenlehne 3A des Beifahrersitzes 3 und einer Armaturen-/Handschuhfachverkleidung 16 als Kontaktflächen für den Oberkörper des Insassen 6 zur Festlegung des maximalen Vorverlagerungsweges S_max dient.

Wenn der errechnete Vorverlagerungsweg S_l größer als der vorgegebene maximale Vorverlagerungsweg S_max ist, wird ein Gefährdungssignal generiert, welches zur Folge hat, dass die Steuereinrichtung 12 ein Auslösesignal für das Airbag-Modul 14 zeitweise unterbindet oder ein Auslösesignal zu einer entsprechend abgeschwächten Airbagauslösung ausgibt.

Es versteht sich, dass bei der Berechnung der einzelnen Signale geeignete Filter, Plausibilisierungen und Korrekturfaktoren zum Einsatz kommen können, welche an sich hinreichend bekannt und daher vorliegend nicht weiter beschrieben sind.

Wenngleich die erfindungsgemäß ausgestaltete Ansteuerung einer Insassenrückhalteeinrichtung einem Prallkissen besonders für hoch gefährdete, nicht gesicherte Beifahrer geeignet ist, kann eine entsprechend ausgestattete Insassenrückhalteeinrichtung auch auf anderen Sitzen mit entsprechender Berücksichtigung der geometrischen Gegebenheiten Anwendung finden.

**Patentansprüche**

1. Kraftfahrzeug mit einer Insassenrückhalteeinrichtung (14), deren steuereinrichtung (12) bei einem in Abhängigkeit von Signalen einer Sicherheitssensorik (2) generierten, vordefinierten Gefährdungssignal ein Auslösesignal erzeugt, demzufolge die Insassenrückhalteeinrichtung (14) mittels wenigstens eines Prallkissens (13) auf einen Fahrzeuginsassen (6) einwirkt, wobei die Steuereinrichtung (12) das Gefährdungssignal zumindest in Abhängigkeit von Fahrzeugbeschleunigungssignalen (a_x, a_y, a_r) und einem die Aktivierung oder Deaktivierung eines Sicherheitsgurtes (15) repräsentierenden Gurtzustandssignal generiert,
**dadurch gekennzeichnet,**
**dass** die Steuereinrichtung (12) bei einer erkannten Deaktivierung des Sicherheitsgurtes (15) und Fahrzeugbeschleunigungssignalen (a_x a_y, a_r), denen bei Deaktivierung des Sicherheitsgurtes (15) eine kritische Insassenvorverlagerung zugeordnet ist, die Insassenrückhalteeinrichtung (14) wenigstens für einen bestimmten Zeitraum deaktiviert und/oder mit reduzierter Kraft aktiviert, wobei eine Insassenvorverlagerung als kritisch definiert ist, wenn ein sich aus den Fahrzeugbeschleunigungssignalen (a_x, a_y, a_r) und ihrer Wirkzeit (t) errechneter Vorverlagerungsweg (S_l) größer als eine Schwelle eines Vorverlagerungsweges (S_max) ist.

2. Kraftfahrzeug nach Anspruch 1,
**dadurch gekennzeichnet,**
**dass** die Steuereinrichtung (12) zur Generierung des Gefährdungssignals die Fahrzeugbeschleunigungssignale (a_x, a_y, a_r) bezüglich des Betrages und ihres zeitlichen Verlaufs, insbesondere in einer einem Fahrzeugaufprall vorangehenden Pre-Crash-Phase, auswertet.

3. Kraftfahrzeug nach Anspruch 1 oder 2,
**dadurch gekennzeichnet,**
**dass** die Steuereinrichtung (12) einen über einen Längsbeschleunigungssensor (4) ermittelten Verzögerungsbetrag (a_x) als Fahrzeugbeschleunigungssignal auswertet.

4. Kraftfahrzeug nach einem der Ansprüche 1 bis 3,
**dadurch gekennzeichnet,**
**dass** die Steuereinrichtung (12) einen über einen Querbeschleunigungssensor (5) ermittelten Verzögerungsbetrag (a_y) als Fahrzeugbeschleunigungssignal auswertet.

5. Kraftfahrzeug nach Anspruch 3 und 4,
**dadurch gekennzeichnet,**
**dass** die Steuereinrichtung (12) aus einem über den Längsbeschleunigungssensor (4) ermittelten Verzögerungsbetrag (a_x) und einem über den Querbeschleunigungssensor (5) ermittelten Verzögerungsbetrag (a_y) einen resultierenden Verzögerungsbetrag (a_r) ermittelt und als Fahrzeugbeschleunigungssignal auswertet.

6. Kraftfahrzeug nach einem der Ansprüche 1 bis 5,
**dadurch gekennzeichnet,**
**dass** die Steuereinrichtung (12) einen über die Fahrzeuggeschwindigkeit (v_x) ermittelten Verzögerungsbetrag in Fahrzeuglängsrichtung als Fahrzeugbeschleunigungssignal auswertet.

7. Kraftfahrzeug nach Anspruch 6,
**dadurch gekennzeichnet,**
**dass** die Fahrzeuggeschwindigkeit (v_x) repräsentierende Signale von Raddrehzahlsensoren (8, 9, 10, 11) an die Steuereinrichtung (12) ausgegeben werden.

8. Kraftfahrzeug nach einem der Ansprüche 1 bis 7,
**dadurch gekennzeichnet,**
**dass** die Steuereinrichtung (12) eine wirkdauer (t) der Fahrzeugbeschleunigungssignale (a_x, a_y, a_r) auswertet.

9. Kraftfahrzeug nach einem der Ansprüche 1 bis 8,
**dadurch gekennzeichnet,**
**dass** die Schwelle des Vorverlagerungsweges (S_max) in Abhängigkeit des Abstandes zwischen einer Armaturen-/Handschuhfachverkleidung (16) und einer maximalen Rückwärtsstellung eines Fahrzeugsitzes (3) festgelegt ist.

10. Kraftfahrzeug nach einem der Ansprüche 1 bis 9,
**dadurch gekennzeichnet,**
**dass** das Prallkissen (13) ein entfaltbarer Gassack ist.

11. Kraftfahrzeug nach Anspruch 10,
**dadurch gekennzeichnet,**
**dass** der Gassack (13) in wenigstens zwei Stufen entfaltbar ist, wobei die Steuereinrichtung (12) bei einer erkannten Deaktivierung des Sicherheitsgurtes (15) und einer kritischen Insassenvorverlagerung zugeordneten Fahrzeugbeschleunigungssignalen (a_x, a_y, a_r) ein Signal zur Auslösung nur einer ersten Stufe ausgibt.

12. Kraftfahrzeug nach einem der Ansprüche 1 bis 9,
**dadurch gekennzeichnet,**
**dass** das Prallkissen durch ein ausfahrbares, im Bereich einer Armaturenbrett-/Handschuhfachverkleidung (16) angeordnetes Polsterelement ausgebildet ist.

13. Kraftfahrzeug nach einem der Ansprüche 1 bis 12,
**dadurch gekennzeichnet,**
**dass** die Insassenrückhalteeinrichtung (14) einem Beifahrersitz (3) zugeordnet ist.

**Claims**

1. Motor vehicle with an occupant restraint device (14), the control unit (12) of which, in response to a predefined danger signal generated in dependence on signals of a safety sensor system (2), generates a trigger signal following which the occupant restraint device (14) acts on a vehicle occupant by means of at least one impact cushion (13), the control unit (12) generating the danger signal at least in dependence on vehicle acceleration signals (a_x, a_y, a_r) and on a belt state signal representing the activation of a seat belt (15), **characterised in that** the control unit (12), on detection of a deactivation of the seat belt (15) and of vehicle acceleration signals (a_x, a_y, a_r) to which a critical forward displacement of an occupant is assigned if the seat belt (15) is deactivated, deactivates the occupant restraint device (14) at least for a defined time and/or activates it with reduced force, a forward displacement of an occupant being defined as critical if a forward displacement distance (S_1) calculated from the vehicle acceleration signals (a_x, a_y, a_r) and their effective time (t) exceeds a threshold value of a forward displacement distance (S_max).

2. Motor vehicle according to claim 1, **characterised in that** the control unit (12) evaluates the vehicle acceleration signals (a_x, a_y, a_r) for generating the danger signal in terms of their value and their progress in time, in particular in a pre-crash phase preceding a vehicle impact.

3. Motor vehicle according to claim 1 or 2, **characterised in that** the control unit (12) evaluates a deceleration value (a_x) determined via a longitudinal acceleration sensor (4) as vehicle acceleration signal.

4. Motor vehicle according to any of claims 1 to 3, **characterised in that** the control unit (12) evaluates a deceleration value (a_y) determined via a transverse acceleration sensor (5) as vehicle acceleration signal.

5. Motor vehicle according to claims 3 and 4, **characterised in that** the control unit (12) determines a resultant deceleration value (a_r) from a deceleration value (a_x) determined via the longitudinal acceleration sensor (4) and from a deceleration value (a_y) determined via the transverse acceleration sensor (5) and evaluates this resultant value as vehicle acceleration signal.

6. Motor vehicle according to any of claims 1 to 5, **characterised in that** the control unit (12) evaluates a deceleration value in the longitudinal direction of the vehicle determined via the vehicle speed (v_x) as vehicle acceleration signal.

7. Motor vehicle according to claim 6, **characterised in that** signals representing the vehicle speed (v_x) are output by wheel speed sensors (8, 9, 10, 11) to the control unit (12).

8. Motor vehicle according to any of claims 1 to 7, **characterised in that** the control unit (12) evaluates an effective time (t) of the vehicle acceleration signals (a_x, a_y, a_r).

9. Motor vehicle according to any of claims 1 to 8, **characterised in that** the threshold value of the forward displacement distance (S_max) is set in dependence on the distance between an instrument panel/glove compartment moulding (16) and a maximum rearward position of a vehicle seat (3).

10. Motor vehicle according to any of claims 1 to 9, **characterised in that** the impact cushion (13) is an unfoldable airbag.

11. Motor vehicle according to claim 10, **characterised in that** the airbag (13) is unfolded in at least two stages, the control unit (12), on detection of a deactivation of the seat belt (15) and of vehicle acceleration signals (a_x, a_y, a_r) which are assigned to a critical forward displacement of an occupant, outputting a signal to trigger a first stage only.

12. Motor vehicle according to any of claims 1 to 9, **characterised in that** the impact cushion is designed as a retractable cushion element located in the region of an instrument panel/glove compartment moulding (16).

13. Motor vehicle according to any of claims 1 to 12, **characterised in that** the occupant restraint device (14) is assigned to a front passenger seat (3).

**Revendications**

1. Véhicule automobile équipé d'un système (14) d'occupants, dont le système (12) de commande produit un signal de déclenchement en présence d'un signal de danger prédéfini, généré en fonction de signaux d'un système de détection de sécurité (2), le système de retenue d'occupants (14) agissant alors au moyen d'au moins un airbag (13) sur un occupant (6) du véhicule, le système de commande (12) génère le signal de danger au moins en fonction de signaux d'accélération (a_x, a_y, a_r) du véhicule et en fonction d'un signal d'état de ceinture représentant l'activation ou la désactivation d'une ceinture de sécurité (15), **caractérisé en ce que** le système de commande (12) désactive le système de retenue d'occupants (14) au moins pour un laps de temps déterminé et / ou l'active de façon atténuée lorsqu'une désactivation de la ceinture de sécurité (15) a été reconnue et en présence de signaux d'accélération de véhicule (a_x, a_y, a_r), auxquels est associé un déplacement critique de l'occupant vers l'avant en cas de désactivation de la ceinture de sécurité (15), un déplacement critique de l'occupant étant défini comme critique lorsqu'un parcours de déplacement vers l'avant (S_1) calculé à partir des signaux d'accélération du véhicule automobile (a_x, a_y, a_r) et leur temps d'action (t) est supérieur à un seuil d'un parcours de déplacement vers l'avant (S_max).

2. Véhicule automobile selon la revendication 1, **caractérisé en ce que** le système de commande (12) servant à générer le signal de danger, évalue le nombre et la courbe temporelle des signaux d'accélération du véhicule automobile (a_x, a_y, a_r) , en particulier, dans une phase de pré-collision qui précède une collision du véhicule automobile.

3. Véhicule automobile selon la revendication 1 ou 2, **caractérisé en ce que** le système de commande (12) évalue la valeur de décélération (a_x) définie par un capteur (4) d'accélération longitudinale en tant que signal d'accélération du véhicule.

4. Véhicule automobile selon l'une quelconque des revendications 1 à 3, **caractérisé en ce que** le système de commande (12) évalue la valeur de décélération (a_y) définie par un capteur (5) d'accélération transversale (5) en tant que signal d'accélération du véhicule.

5. Véhicule automobile selon la revendication 3 ou 4, **caractérisé en ce que** le système de commande (12) définie une valeur de décélération (a_r) résultant d'une valeur de décélération (a_x) définie par le capteur (4) d'accélération longitudinale et d'une valeur de décélération (a_y) définie par le capteur d'accélération transversale (5) et l'évalue en tant que signal d'accélération du véhicule.

6. Véhicule automobile selon l'une quelconque des revendications 1 à 5, **caractérisé en ce que** le système de commande (12) évalue une valeur de décélération définie par la vitesse du véhicule automobile (v_x) dans le sens longitudinal du véhicule en tant que signal d'accélération du véhicule.

7. Véhicule selon la revendication 6, **caractérisé en ce que** les signaux des capteurs de vitesse de roue (8, 9, 10, 11) représentant la vitesse du véhicule automobile (v_x) sont fournis au système de commande (12).

8. Véhicule automobile selon l'une quelconque des revendications 1 à 7, **caractérisé en ce que** le système de commande (12) évalue un temps d'action (t) des signaux d'accélération (a_x, a_y, a_r).

9. Véhicule automobile selon l'une quelconque des revendications 1 à 8, **caractérisé en ce que** le seuil du parcours de déplacement vers l'avant (S_max) est défini en fonction de la distance entre un revêtement de boîte à gants (16) / du tableau de bord et une position arrière d'un siège de véhicule automobile (3).

10. Véhicule automobile selon l'une quelconque des revendications 1 à 9, **caractérisé en ce que** l'airbag (13) est un sac pliable rempli de gaz.

11. Véhicule automobile selon la revendication 10, **caractérisé en ce que** le sac (13) rempli de gaz est pliable au moins en deux étapes, le système de commande (12) fournit un signal destiné au déclenchement de la première étape uniquement lorsqu'une désactivation de la ceinture de sécurité (15) a été reconnue et des signaux d'accélération du véhicule automobile (a_x, a_y, a_r) sont associés à un déplacement critique de l'occupant vers l'avant.

12. Véhicule selon l'une des revendications 1 à 9, **caractérisé en ce que** l'airbag est formé par un élément de rembourrage amovible disposé dans la région d'un revêtement (16) de boîte à gants / de tableau de bord.

13. Véhicule automobile selon l'une quelconque des revendications 1 à 12, **caractérisé en ce que** le dispositif de retenue des occupants (14) est associé à un siège de passager (3).

$$a\_x, a\_y, t$$

$$a\_r = \sqrt{a\_x^2 + a\_y^2}$$

$$S\_l = (a\_r * t^2)/2$$

$$S\_l > S\_max \ ?$$

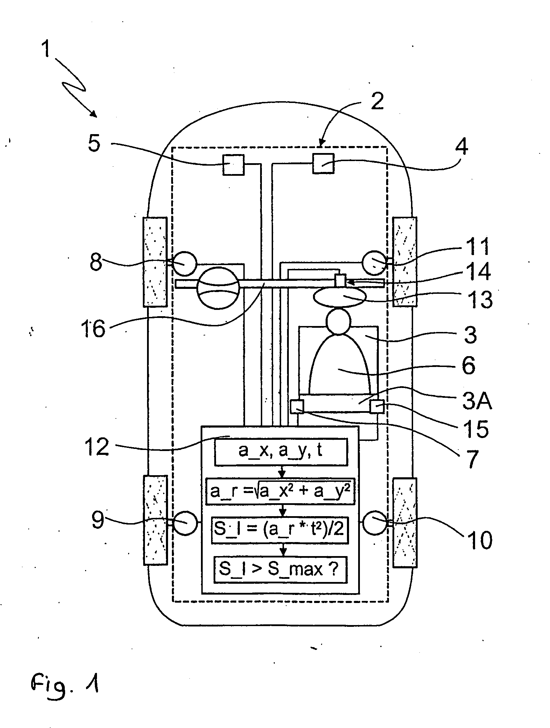

Fig. 1

**IN DER BESCHREIBUNG AUFGEFÜHRTE DOKUMENTE**

**In der Beschreibung aufgeführte Patentdokumente**

- DE 10126127 A
- DE 3803426 A1